(19) Europäisches Patentamt
European Patent Office
Office européen des brevets

(11)   **EP 2 878 897 B1**

(12)   **EUROPEAN PATENT SPECIFICATION**

(45) Date of publication and mention
of the grant of the patent:
**10.01.2018 Bulletin 2018/02**

(21) Application number: **13794592.9**

(22) Date of filing: **07.02.2013**

(51) Int Cl.:
*F24H 7/04* (2006.01)       *F28D 20/00* (2006.01)
*F24H 9/18* (2006.01)       *F24H 7/02* (2006.01)
*F24H 9/00* (2006.01)       *F24H 7/00* (2006.01)

(86) International application number:
**PCT/CN2013/071521**

(87) International publication number:
**WO 2013/174162 (28.11.2013 Gazette 2013/48)**

(54) **ULTRA-HIGH VOLTAGE ELECTRIC HEAT ENERGY STORAGE DEVICE**

WÄRMEENERGIESPEICHERUNGSVORRICHTUNG MIT ULTRAHOHER SPANNUNG

DISPOSITIF DE STOCKAGE D'ÉNERGIE ÉLECTRIQUE THERMIQUE À TENSION ULTRA-ÉLEVÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.05.2012 CN 201210159123**

(43) Date of publication of application:
**03.06.2015 Bulletin 2015/23**

(73) Proprietor: **Shenyang Shijie Electric Co. Ltd.
Liaoning 110169 (CN)**

(72) Inventor: **ZHU, Jianxin
Shenyang
Liaoning 110169 (CN)**

(74) Representative: **Stiel, Jürgen
Patentanwalt Stiel
Geissleite 32
97289 Thüngen (DE)**

(56) References cited:
CH-A5- 640 628        CN-A- 102 635 944
CN-U- 201 653 217    CN-U- 202 769 948
CN-Y- 2 601 369        CN-Y- 2 665 573
DE-A1- 1 909 289        DE-A1- 3 109 839
DE-A1- 19 530 775    DE-B- 1 232 290
DE-U- 7 034 951        DE-U1- 7 911 393
GB-A- 462 842        GB-A- 1 318 946
JP-A- H05 133 615    JP-A- H07 229 650
US-A- 4 234 782        US-A- 5 042 081

## Description

### CROSS-REFERENCE TO RELATED APPLICATION

This application claims the benefit of Chinese Patent Application No. 201210159123.0 filed on May 22, 2012 in the State Intellectual Property Office of China (titled as "ULTRAHIGH VOLTAGE ELECTRO-THERMAL ENERGY STORAGE DEVICE" ), the whole disclosure of which is incorporated herein by reference.

### BACKGROUND OF THE INVENTION

#### Field of the Invention

The present invention relates to an ultra-high voltage electro-thermal energy storage device, and particularly to a device that is powered directly by 10-500 kV EHV grid, heats through electric heating wires provided inside a heat energy storage body, stores heat energy through an energy storage module that can efficiently use cheap electricity and wind-abandoned electricity, and supplies heat for users.

#### Description of the Related Art

In the existing high-voltage electro-thermal energy storage device which supplies electric power at a 10 KV voltage level, separated heat energy storage bodies mounted on three separated insulating bases and arranged by layers through electric heating wires and heat energy storage modules according to rectangular shapes supply power in a manner of star-connection. In a working state, a voltage difference between the topmost electric heating wire and the lowermost electric heating wire of each separated heat energy storage body is less than 6 KV. In a case where heat energy storage bodies are mounted in an electro-thermal energy storage device having an operating voltage of above 20 KV in the above-mentioned manner, the voltage difference between the topmost electric heating wire and lowermost electric heating wire of the separated heat energy storage body is higher than 10 KV. Thus, the electric heating wire exposed to the hot convection of air will cause the insulation strength of the heat energy storage body to decrease to less than 10 KV due to foreign substances in the hot convection of air and a temperature increase of the heat energy storage module. In a worse circumstance, an electric discharge phenomenon between layers of electric heating wires inside the heat energy storage body will adversely affect normal operation of the electro-thermal energy storage device. Therefore, there is needed a novel structure to reduce terminal voltage of heat energy storage bodies at a voltage level of above 20 kV, such that the high voltage electro-thermal energy storage device can operate safely and stably so as to meet the requirement of users. Document US 4 234 782 A discloses a storage device comprising the features of the preamble of claim 1.

### SUMMARY OF THE INVENTION

The present invention has been made to overcome or alleviate at least one aspect of the above mentioned disadvantages in the prior art.

Accordingly, it is an object of the present invention to provide an ultra-high voltage electro-thermal energy storage device which is composed of 3(n+1) separated heat energy storage bodies mounted on separated insulating bases and arranged by layers through electric heating wires and heat storage modules according to rectangular shapes. The n+1 separated heat energy storage bodies are provided for each phase, and the n separated heat energy storage bodies are connected in series to form an AC power supply loop for each phase. An insulation voltage of each separated heat energy storage body with respect to the ground meets requirements for an insulation voltage of an electro-thermal energy storage device at the same voltage level with respect to the ground. Voltage difference between two terminals of leading wires of the electric heating wires inside each separated heat energy storage body is equal to

$$1/(n * \sqrt{3})$$ times as high as the rated operating voltage of the ultra-high voltage electro-thermal energy storage device, so as to eliminate electric discharge phenomenon between electric heating wires caused due to higher voltage between two terminals of leading wires of the electric heating wires inside the separated heat energy storage body. A sum of electric powers of the 3n separated heat energy storage bodies is equal to the rated operating voltage of the ultra-high voltage electro-thermal energy storage device. The (n+1)th separated heat energy storage body is a backup heat energy storage body for purpose of maintenance.

The technical solution of the present invention is described as follows.

An ultra-high voltage electro-thermal energy storage device comprises a separated heat energy storage body part, a heat exchanger part and an outer thermal insulation layer part, characterized in that: the separated heat energy storage body is composed of an isolation layer, a safety gap, a heat storage module, an electric heating wire, a convection chamber for heat dissipation, an insulating air-duct, a power supply sheath, a back flow air passage, a motor, a front end of a leading wire for a power supply, a tail end of the leading wire for the power supply, and an outer thermal insulation layer; the separated heat energy storage body is a component of the ultra-high voltage electro-thermal energy storage device, and 3(n+1) separated heat energy storage bodies are provided for composing the ultra-high voltage electro-thermal energy storage device with any two adjacent separated heat energy storage bodies being isolated by isolation layers and the electric heating wires of the n separated heat energy storage bodies being connected end to end to be connected in series; and the heat storage module is a heat storage unit for the separated heat energy storage body to store heat energy from the electric heating wires, and also is a frame configured to support the electric heating wires and provided with a heat dissipating hole in each layer.

The separated heat energy storage body may be designed to be any geometric body that can meet requirements, and all components other than the isolation layer, the outer thermal insulation layer, a fan and the motor are mounted on a base which has an insulation strength that is larger than an insulation strength required for a rated input operation voltage of the ultra-high voltage electro-thermal energy storage device.

The isolation layer is formed by metal materials, heat storage materials, or insulating materials that have stable structures in a range of operating temperature.

The heat exchanger is a shell-and-tube type vapor-to-water heat exchanger, and hot air discharged from the separated heat energy storage body is driven by the fan into the heat exchanger to release heat energy to the water inside the shell and tube, and hot water, vapor or hot air can be output as required by a user, and then the air at a lower temperature after the heat exchanging operation flows back through the back flow air passage to finish a hot air loop cycle.

The present invention has the following advantages.

The heat energy storage bodies of the ultra-high voltage electro-thermal energy storage device according to the embodiment of the present invention are arranged in such manner that n separated heat energy storage bodies are connected in series, so as to address the issue of over-high voltage on terminals of the separated heat energy storage bodies. The present invention can be configured conveniently, and is suitable for various voltage levels above 10 KV, and can be used as a heat energy storage device having an operating voltage of over 500 KV. The ultra-high voltage electro-thermal energy storage device can be operated at various voltages as long as a voltage difference between two terminals of leading wires of the electric heating wires inside each separated heat energy storage body is lower than the minimum break-down voltage of the ultra-high voltage electro-thermal energy storage device such that the electric heating wires mounted inside the separated heat energy storage bodies operates steadily.

## BRIEF DESCRIPTION OF THE DRAWINGS

Fig. 1 is an illustrative structural view of a separated heat energy storage body of an ultra-high voltage electro-thermal energy storage device according to the present invention.
Fig. 2 is an illustrative structural view of an embodiment of the separated heat energy storage body of the ultra-high voltage electro-thermal energy storage device according to the present invention.
Fig. 3 is an illustrative view showing wiring connection of the electric heating wires inside the separated heat energy storage body of the ultra-high voltage electro-thermal energy storage device according to the present invention.

## DETAILED DESCRIPTION OF PREFERRED EMBODIMENTS

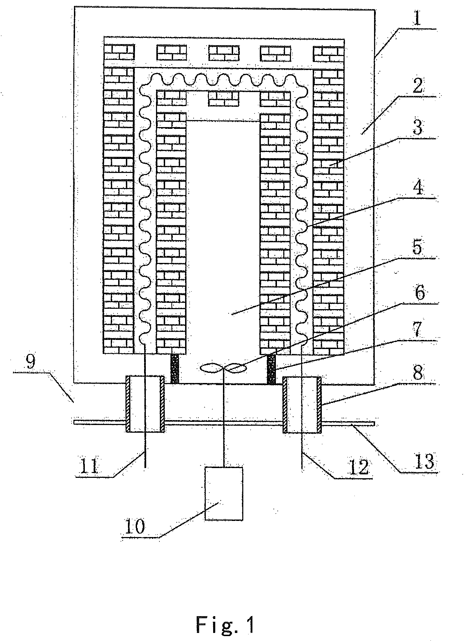

As shown in Fig. 1, an ultra-high voltage electro-thermal energy storage device is comprised of a separated heat energy storage body part, a heat exchanger part, and an outer thermal insulation layer part. The separated heat energy storage body is composed of an isolation layer 1, a safety gap 2, a heat storage module 3, an electric heating wire 4, a convection chamber 5 for heat dissipation, a fan 6, an insulating air-duct 7, a power supply sheath 8, a back flow air passage 9, a motor 10, a front end 11 of a leading wire for a power supply, a tail end 12 of the leading wire for the power supply, and the outer thermal insulation layer 13.

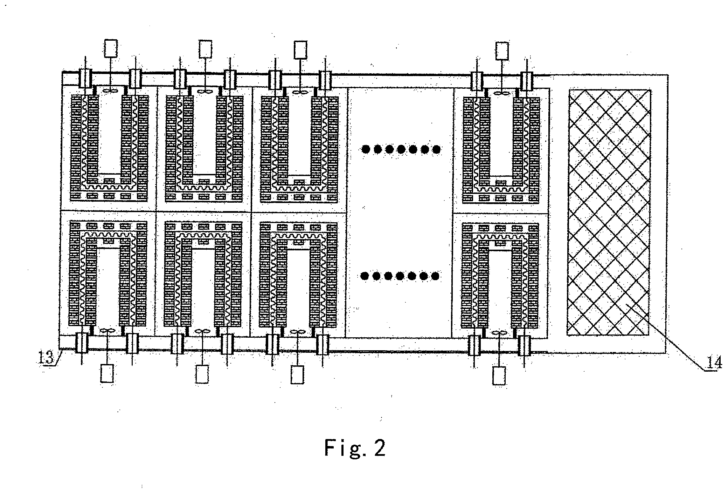

As shown in Fig. 2, the separated heat energy storage body is a component of the ultra-high voltage electro-thermal energy storage device, and 3(n+1) separated heat energy storage bodies are needed for composing the ultra-high voltage electro-thermal energy storage device in which any two adjacent separated heat energy storage bodies are isolated by isolation layers and the electric heating wires of the n separated heat energy storage bodies are connected end to end so as to be connected in series. The outer thermal insulation layer 13 and the heat exchanger 14 are also shown in Fig. 2.

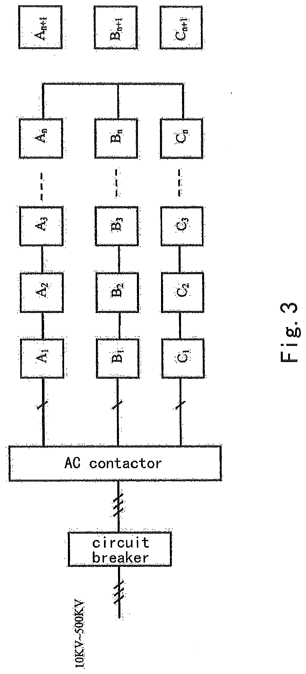

Fig. 3 shows a wiring diagram of the electric heating wires inside the separated heat energy storage body, in which A1, A2, A3, ..., and An show a schematic wiring diagram of an input loop in series for an A phase power supply, and An+1 is a backup separated heat energy storage body assembly for the A phase power supply; B1, B2, B3, ..., and Bn show a schematic wiring diagram of an input loop in series for a B phase power supply, and Bn+1 is a backup separated heat energy storage body assembly for the B phase power supply; and C1, C2, C3, ..., and Cn show a schematic wiring diagram of an input loop in series for a C phase power supply, and Cn+1 is a backup separated heat energy storage body assembly for the C phase power supply.

## Claims

1. An ultra-high voltage electro-thermal energy storage device, comprising a separated heat energy storage body part, a heat exchanger part (14) and an outer thermal insulation layer part (13), **characterized in that**:

the separated heat energy storage body is composed of an isolation layer (1), a safety gap (2), a heat storage module (3), an electric heating wire (4), a convection chamber for heat dissipation (5), an insulating air-duct (7), a power supply sheath (8), a back flow air passage (9), a fan (6) and a motor (10), a front end of a leading wire for a power supply (11), a tail end of the leading wire for the power supply (12), and an outer thermal insulation layer (13);

the separated heat energy storage body is a component of the ultra-high voltage electro-thermal energy storage device, **characterized in that** 3(n+1) separated heat energy storage bodies are provided for composing the ultra-high voltage electro-thermal energy storage device with any two adjacent separated heat energy storage bodies being isolated by isolation layers and the electric heating wires (4) of n separated heat energy storage bodies being connected end to end (11, 12) to be connected in series; and

the heat storage module (3) is a heat storage unit for the separated heat energy storage body arranged to store heat energy from the electric heating wires (4), and the heat storage module (3) also is a frame configured to support the electric heating wires (4), and heat dissipating holes are provided between the respective heat storage modules (3).

**2.** The ultra-high voltage electro-thermal energy storage device according to claim 1, **characterized in that** the separated heat energy storage body is designed to be any geometric body that can meet requirements, and all components other than the isolation layer (1), the outer thermal insulation layer (13), the fan (6) and the motor (10) are mounted on a base which has an insulation strength that is larger than an insulation strength required for a rated input operation voltage of the ultra-high voltage electro-thermal energy storage device.

**3.** The ultra-high voltage electro-thermal energy storage device according to claim 1, **characterized in that** the isolation layer (1) is formed by metal materials, heat storage materials, or insulating materials that have stable structures in a range of operating temperature.

**4.** The ultra-high voltage electro-thermal energy storage device according to claim 1, **characterized in that** the heat exchanger (14) is a shell-and-tube type vapor-to-water heat exchanger, and the ultra-high voltage electro-thermal energy storage device is configured such that hot air discharged from the separated heat energy storage body is driven by the fan (6) into the heat exchanger (14) to release heat energy to the water inside the shell and tube, and hot water, vapor or hot air can be output as required by a user, and then the air at a lower temperature after the heat exchanging operation flows back through the back flow air passage to finish a hot air loop cycle.

**Patentansprüche**

**1.** Elektrothermische Energiespeicherungsvorrichtung mit ultrahoher Spannung, aufweisend einen separaten Wärmeenergiespeicherkörperteil, einen Wärmetauscherteil (14) und einen äußeren Wärmedämmschichtteil (13), **dadurch gekennzeichnet, dass**:

der separate Wärmeenergiespeicherkörper aus einer Dämmschicht (1), einem Sicherheitsspalt (2), einem Wärmespeichermodul (3), einem elektrischen Heizdraht (4), einer Konvektionskammer (5) zur Wärmeableitung, einem isolierenden Luftkanal (7), einer Stromversorgungshülle (8), einem Rückströmungsluftdurchgang (9), einem Gebläse (6) und einem Motor (10), einem vorderen Ende eines leitenden Drahtes für eine Stromversorgung (11), einem hinteren Ende des leitenden Drahtes für die Stromversorgung (12) und einer äußeren Wärmedämmschicht (13) zusammengesetzt ist;

wobei der separate Wärmeenergiespeicherkörper ein Bestandteil der elektrothermischen Energiespeichervorrichtung mit ultrahoher Spannung ist, **dadurch gekennzeichnet, dass** 3(n+1) separate Wärmeenergiespeicherkörper bereitgestellt sind, um die elektrothermische Energiespeichervorrichtung mit ultrahoher Spannung mit beliebigen zwei benachbarten separaten Wärmeenergiespeicherkörpern zusammenzusetzen, wobei die separaten Wärmeenergiespeicherkörper durch Dämmschichten isoliert sind und die elektrischen Heizdrähte (4) der n separaten Wärmeenergiespeicherkörper Ende an Ende (11, 12) verbunden sind, um in Reihe geschaltet zu werden; und

das Wärmespeichermodul (3) eine Wärmespeichereinheit für den separaten Wärmeenergiespeicherkörper ist, der angeordnet ist, um Wärmeenergie von den elektrischen Heizdrähten (4) zu speichern, und das Wärmespeichermodul (3) auch ein Rahmen ist, der für Abstützen der elektrischen Heizdrähte (4) konfiguriert ist, und Wärmeableitlöcher zwischen den jeweiligen Wärmespeichermodulen (3) bereitgestellt sind.

**2.** Elektrothermische Energiespeicherungsvorrichtung mit ultrahoher Spannung nach Anspruch 1, **dadurch gekennzeichnet, dass** der separate Wärmeenergiespeicherkörper gestaltet ist, um jeglicher geometrischer Körper zu sein, der Anforderungen erfüllen kann, und alle anderen Komponenten, mit Ausnahme der Dämmschicht (1), der äußeren Wärmedämmschicht (13), des Gebläses (6) und des Motors (10), auf einer Basis montiert sind, die eine Isolationsfestigkeit aufweist, die größer ist als eine Isolationsfestigkeit, die für eine Nenn-Eingangsbetriebsspannung der elektro-thermischen Energiespeichervorrichtung mit ultrahoher Spannung erforderlich ist.

**3.** Elektrothermische Energiespeicherungsvorrichtung mit ultrahoher Spannung nach Anspruch 1, **dadurch gekennzeichnet, dass** die Dämmschicht (1) durch Metallmaterialien, Wärmespeichermaterialien oder Isoliermaterialien gebildet wird, die stabile Strukturen in einem Bereich von Betriebstemperatur aufweisen.

**4.** Elektrothermische Energiespeicherungsvorrichtung mit ultrahoher Spannung nach Anspruch 1, **dadurch gekennzeichnet, dass** der Wärmetauscher (14) ein Mantel-und-Rohr-Typ Dampf-zu-Wasser-Wärmetauscher ist und die elektrothermische Energiespeicherungsvorrichtung mit ultrahoher Spannung so konfiguriert ist, dass vom separaten Wärmeenergiespeicherkörper abgegebene Heißluft vom Gebläse (6) in den Wärmetauscher (14) getrieben wird, damit Wärmeenergie an das Wasser im Inneren von Mantel und Rohr freigegeben wird, und Heißwasser, Dampf oder Heißluft nach Bedarf eines Nutzers ausgegeben werden kann, wonach die Luft von einer niedrigeren Temperatur nach dem Wärmetauschvorgang durch den Rückstromluftdurchgang zurückströmt, um einen Heißluftumlaufzyklus zu beenden.

**Revendications**

**1.** Dispositif thermoélectrique de stockage d'énergie à tension ultra élevée, qui comprend une partie de corps de stockage d'énergie thermique séparée, une partie d'échangeur de chaleur (14) et une partie de couche d'isolement thermique extérieure (13), **caractérisé en ce que** :

le corps de stockage d'énergie thermique séparé est composé d'une couche d'isolement (1), d'un espace de sécurité (2), d'un module de stockage de chaleur (3), d'un fil électrique de chauffage (4), d'une chambre de convection pour la dissipation de chaleur (5), d'une conduite d'air isolante (7), d'une gaine d'alimentation (8), d'un passage d'air à écoulement inverse (9), d'un ventilateur (6) et d'un moteur (10), d'une extrémité avant d'un fil conducteur pour une alimentation (11), d'une extrémité arrière du fil conducteur pour l'alimentation (12), et d'une couche d'isolement thermique extérieure (13) ;

le corps de stockage d'énergie thermique séparé est un composant du dispositif thermoélectrique de stockage d'énergie à tension ultra élevée, **caractérisé en ce que**

3(n+1) corps de stockage d'énergie thermique séparés sont prévus pour composer le dispositif thermoélectrique de stockage d'énergie à tension ultra élevée, dans lequel deux corps de stockage d'énergie thermique séparés adjacents quelconques sont isolés par des couches d'isolement et les fils électriques de chauffage (4) de n corps de stockage d'énergie thermique séparés sont connectés bout à bout (11, 12) pour être connectés en série ; et

le module de stockage de chaleur (3) est une unité de stockage de chaleur pour le corps de stockage d'énergie thermique séparé agencé pour stocker l'énergie thermique provenant des fils électriques de chauffage (4), et le module de stockage de chaleur (3) est également un cadre configuré pour supporter les fils électriques de chauffage (4), et des trous de dissipation de chaleur sont prévus entre les modules de stockage de chaleur (3) respectifs.

**2.** Dispositif thermoélectrique de stockage d'énergie à tension ultra élevée selon la revendication 1, **caractérisé en ce que** le corps de stockage d'énergie thermique séparé est conçu pour être n'importe quel corps géométrique qui peut satisfaire aux spécifications, et tous les composants autres que la couche d'isolement (1), la couche d'isolement thermique extérieure (13), le ventilateur (6) et le moteur (10) sont montés sur une base qui a une résistance d'isolement qui est supérieure à une résistance d'isolement requise pour une tension de fonctionnement d'entrée assignée du dispositif thermoélectrique de stockage d'énergie à tension ultra élevée.

**3.** Dispositif thermoélectrique de stockage d'énergie à tension ultra élevée selon la revendication 1, **caractérisé en ce que** la couche d'isolement (1) est formée par des matériaux métalliques, des matériaux de stockage de chaleur, ou des matériaux isolants qui ont des structures stables dans une plage de température de fonctionnement.

**4.** Dispositif thermoélectrique de stockage d'énergie à tension ultra élevée selon la revendication 1, **caractérisé en ce que** l'échangeur de chaleur (14) est un échangeur de chaleur vapeur-eau du type à enveloppe et tube, et le dispositif thermoélectrique de stockage d'énergie à tension ultra élevée est configuré de sorte que l'air chaud déchargé du corps de stockage d'énergie thermique séparé soit entraîné par le ventilateur (6) dans l'échangeur de chaleur (14) pour libérer l'énergie thermique dans l'eau à l'intérieur de la coque et du tube, et que l'eau chaude, la vapeur ou l'air chaud puisse être délivré en fonction des besoins d'un utilisateur, et qu'ensuite l'air à une température plus basse après l'opération d'échange de chaleur recircule à travers le passage d'air à écoulement inverse pour finir un cycle de boucle d'air chaud.

Fig. 1

Fig. 2

EP 2 878 897 B1

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201210159123

- US 4234782 A